# EUROPEAN PATENT APPLICATION

(11) **EP 4 052 826 A1**
(43) Date of publication of application: **07.09.2022**
(21) Application number: 21217198.7
(22) Date of filing: 22.12.2021
(51) Int. Cl.: B23K 1/00, B23K 26/082, B23K 26/08, B23K 26/364, B23K 26/386, B23K 26/382, B23K 26/40, B23K 101/00, B23K 103/18

(54) **METHOD OF LASER ABLATING A COMPONENT, E.G. A TURBINE NOZZLE, TO FORM A CAVITY ; CORRESPONDING NON TRANSITORY COMPUTER READABLE MEDIUM**

(30) Priority: 28.01.2021 US 202117160793
(71) Applicant: General Electric Company, Schenectady, NY 12345 (US)
(72) Inventor: KOSKI, Timothy John, Cincinnati, 45215 (US); ANDREWS, Timothy Francis, Cincinnati, 45215 (US); MYERS, Caleb Dewayne, Cincinnati, 45215 (US)
(74) Representative: Openshaw & Co.

(57) **Abstract**

Systems and methods of laser ablating a component (200) to form a cavity are provided. In one aspect, a laser system (100) laser ablates a component (200) o remove a slice (SL2, SL3) of material therefrom so that at least a portion of a section of the cavity (S1) is formed. With the slice (SL2, SL3) of material removed, the laser system (100) laser ablates the component (200) along an outline of the section to remove excess sidewall material therefrom to form one or more sidewalls of the section. This removes tapering of the sidewalls. This process can be iterated to form the depth of the cavity (S1). The laser system (100) then laser ablates the component (200) to remove excess end wall material therefrom to form an end wall of the cavity (S1) to a predetermined depth.

## Description

### FIELD

The present subject matter relates generally to laser ablating features into components, such as components for gas turbine engines.

### BACKGROUND

Some aviation gas turbine engine components include one or more cavities or openings. For example, a turbine nozzle assembly can include a plurality of turbine nozzles. Each turbine nozzle typically includes seal slots. The seal slots hold spline seals between adjacent turbine nozzles. Conventionally, turbine nozzles have been formed of metallic materials. The seal slots of such metallic turbine nozzles have frequently been machined with Electric Discharge Machining (EDM) due to the high aspect ratio and tight tolerance requirements of the seal slots. Turbine nozzles are more commonly being formed of Ceramic Matrix Composite (CMC) materials. Using EDM to machine CMC components has certain challenges due to the nonhomogeneous material of such CMC components. Ultrasonic machining has proven successful in machining seal slots in CMC parts. However, similar to EDM, ultrasonic machining typically requires expensive tooling and has a relatively long cycle time.

Accordingly, systems and methods that address one or more of the challenges noted above would be useful.

### BRIEF DESCRIPTION

Aspects and advantages of the invention will be set forth in part in the following description, or may be obvious from the description, or may be learned through practice of the invention.

In one aspect, a method of laser ablating a component to form a cavity is provided. The method includes (a) laser ablating the component to remove a slice of material therefrom so that at least a portion of a section of the cavity is formed. The method further includes (b) laser ablating the component along an outline of the section to remove excess sidewall material therefrom to form one or more sidewalls of the section. In addition, the method includes (c) iterating (a) and (b) of the method to form one or more subsequent sections of the cavity. Further, the method includes (d) after iterating at (c), laser ablating the component to remove excess end wall material therefrom to form an end wall of the cavity to a predetermined depth.

In another aspect, a method of laser ablating a turbine nozzle to form a seal slot is provided. The method includes (a) laser ablating the turbine nozzle to remove a slice of material therefrom so that at least a portion of a section of the seal slot is formed. Further, the method includes (b) laser ablating the turbine nozzle to remove excess sidewall material therefrom to form one or more sidewalls of the section of the seal slot. In addition, the method includes (c) laser ablating the turbine nozzle to remove excess end wall material to form an end wall of the seal slot to a predetermined depth.

In another exemplary aspect, a non-transitory computer readable medium is provided. The non-transitory computer readable medium includes computer-executable instructions, which, when executed by one or more processors of a controller of a laser system, cause the controller to: (a) cause the laser system to laser ablate a component to remove a slice of material therefrom so that at least a portion of a section of a cavity is formed; (b) cause the laser system to laser ablate the component along an outline of the section to remove excess sidewall material therefrom to form one or more sidewalls of the section; (c) cause the laser system to iterate (a) and (b) for one or more subsequent sections of the cavity; and (d) after iterating at (c), cause the laser system to laser ablate the component to remove excess end wall material therefrom to form an end wall of the cavity to a predetermined depth.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 is a schematic cross-sectional view of an exemplary gas turbine engine according to various embodiments of the present subject matter;
FIG. 2 provides a schematic view of an example laser system for laser ablating components, such as the component depicted in FIG. 2, according to an example embodiment of the present subject matter;
FIG. 3 provides a flow diagram of a method of laser ablating a component to form a cavity therein according to one example embodiment of the present subject matter;
FIG. 4 provides a schematic cross-sectional view of the component of FIG. 2 with a first slice of material removed therefrom by laser ablation to form a first section of the cavity;
FIG. 5 provides a close-up view of Section 5 of FIG. 4 and depicts one of the tapered sidewalls of the newly formed first section of the cavity;
FIG. 6 provides a schematic top plan view of the component of FIG. 2 after the first slice of material has been removed by laser ablation;
FIG. 7 provides a schematic cross-sectional view of the component of FIG. 2 after the first slice of material has been removed and excess sidewall material forming the first section of the cavity has been removed by laser ablating along an outline of the first section;
FIG. 8 provides a schematic cross-sectional view of the component of FIG. 2 and depicts the laser system removing a second slice of material therefrom by laser ablation;
FIG. 9 provides a schematic cross-sectional view of the component of FIG. 2 with the second slice of material removed therefrom by laser ablation to form a second section of the cavity;
FIG. 10 provides a schematic top plan view of the component of FIG. 2 after the second slice of material has been removed by laser ablation;
FIG. 11 provides a schematic cross-sectional view of the component of FIG. 2 after the second slice of material has been removed and excess sidewall material forming the second section of the cavity has been removed by laser ablating along an outline of the second section;
FIG. 12 provides a schematic cross-sectional view of the component of FIG. 2 with at least a portion of the cavity formed to a predetermined depth;
FIG. 13 provides a schematic cross-sectional view of the component of FIG. 2 with the cavity formed to specification; and
FIG. 14 provides an example computing system in accordance with an example embodiment of the present subject matter.

Repeat use of reference characters in the present specification and drawings is intended to represent the same or analogous features or elements.

### DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first," "second," and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows and "downstream" refers to the direction to which the fluid flows.

Aspects of the present disclosure are directed to systems and methods of laser ablating features into components, such as components for gas turbine engines. In one example aspect, a method of laser ablating a component to form a cavity is provided. The component can be a turbine nozzle of a gas turbine engine and the cavity can be a seal slot thereof, for example. The component can be formed of a Ceramic Matrix Composite (CMC) material or another suitable material. The method includes laser ablating the component to remove a slice of material therefrom so that at least a portion of a section of the cavity is formed. A laser system can be used to laser ablate the component. A controller of the laser system can control various components so that a laser beam scans or shoots along the component in a predefined pattern to remove the slice of material. As the laser beam travels into the cavity proximate the sidewalls of the section being formed, the laser beam can clip the top surface of the component due to the conical shape of the laser beam. This results in less energy at the machining surface, and consequently, the sidewalls of the newly formed section can be tapered.

With the slice of material removed, the method includes laser ablating the component along an outline of the section to remove excess sidewall material therefrom to form one or more sidewalls of the section. For instance, the laser beam can be controlled to trace around the outline of the section to remove the excess sidewall material. That is, the laser beam can be specifically shot along the outline to remove tapering of the sidewalls. The controller of the laser system can control various components so that the laser beam scans or shoots along the outline of the section in a predefined pattern to remove the excess sidewall material. With the excess sidewall material removed, the section of the cavity can be fully formed to specification. The process of laser ablating the component to first remove a slice of material and then second to make a pass along the outline can be iterated for one or more subsequent sections of the cavity. Stated another way, the process can be iterated to form the depth of the cavity.

In some instances, multiple outline laser shots can be performed to remove the excess sidewall material, particularly for sections at greater depths of the cavity. For instance, for a section at the opening end of the cavity, only one outline shot may need be performed. However, for a subsequent section formed at a greater depth of the cavity than the section at the opening end of the cavity, multiple outline laser shots may need be performed to remove the excess sidewall material.

After iterating the two-step process noted above, the method includes laser ablating the component to remove excess end wall material therefrom to form an end wall of the cavity to a predetermined depth. The excess end wall material can have a rounded shape along a cross section thereof. The rounded shape of the excess end wall material can have an outline or perimeter at a greater depth than a remainder portion of the rounded shape. The controller of the laser system can control various components so that the laser beam scans in a predefined pattern to remove the excess end wall material. In this way, the end wall can be formed to specification, e.g., the end wall can be made flat or perpendicular to the depth of the cavity.

Advantageously, the systems and methods provided herein can eliminate or reduce the challenges associated with laser ablating cavities in components, particularly cavities with high aspect ratios, such as seal slots of turbine nozzles. For instance, the tapering of sidewalls due to clipping of the laser beam on the top or outer surface of the component can be eliminated or greatly reduced using the systems and methods provided herein. Further, hard tooling is typically not required for laser ablation, unlike conventional machining processes, and the machining cycle time for a given component can also be reduced. Moreover, laser ablation can be used to machine components with a wide variety of materials, including components formed of CMC or metallic materials. The present systems and methods have other advantages and benefits as well.

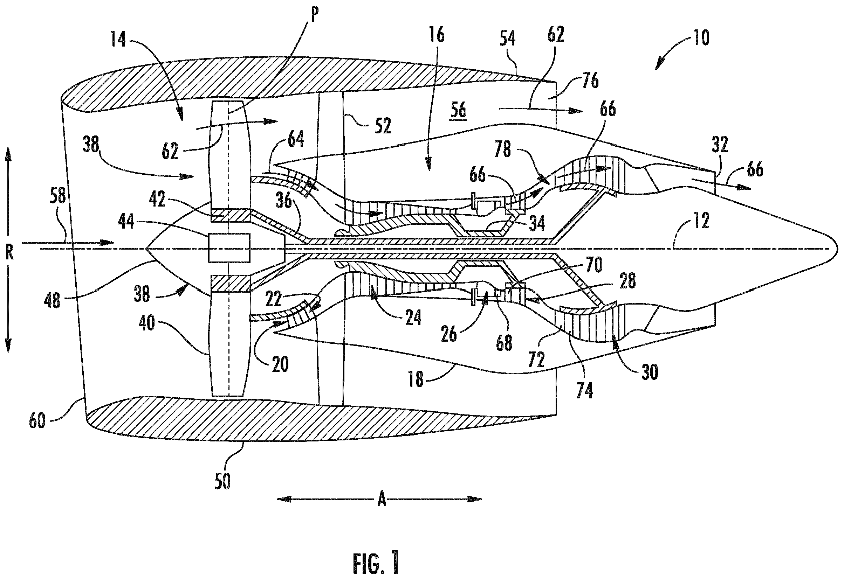

FIG. 1 provides a schematic cross-sectional view of a gas turbine engine in accordance with one example embodiment of the present subject matter. For the depicted embodiment of FIG. 1, the gas turbine engine is a high-bypass turbofan jet engine 10, referred to herein as "turbofan 10." The turbofan 10 defines an axial direction A (extending parallel to a longitudinal centerline 12 provided for reference), a radial direction R, and a circumferential direction extending in a plane orthogonal to the axial direction A three hundred sixty degrees (360°) around the longitudinal centerline 12.

The turbofan 10 includes a fan section 14 and a core turbine engine 16 disposed downstream from the fan section 14. The core turbine engine 16 includes a substantially tubular outer casing 18 that defines an annular core inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft or spool 34 drivingly connects the HP turbine 28 to the HP compressor 24. A low pressure (LP) shaft or spool 36 drivingly connects the LP turbine 30 to the LP compressor 22.

The fan section 14 includes a variable pitch fan 38 having a plurality of fan blades 40 coupled to a disk 42 in a spaced apart manner. As depicted, the fan blades 40 extend outward from the disk 42 generally along the radial direction R. Each fan blade 40 is rotatable relative to the disk 42 about a pitch axis P by virtue of the fan blades 40 being operatively coupled to a suitable actuation member 44 configured to collectively vary the pitch of the fan blades 40 in unison. The fan blades 40, disk 42, and actuation member 44 are together rotatable about the longitudinal axis 12 by LP shaft 36.

Referring still to FIG. 1, the disk 42 is covered by a rotatable front nacelle 48 aerodynamically contoured to promote an airflow through the plurality of fan blades 40. Additionally, the fan section 14 includes an annular fan casing or outer nacelle 50 that circumferentially surrounds the fan 38 and/or at least a portion of the core turbine engine 16. The nacelle 50 may be supported relative to the core turbine engine 16 by a plurality of circumferentially-spaced outlet guide vanes 52. Moreover, a downstream section 54 of the nacelle 50 may extend over an outer portion of the core turbine engine 16 so as to define a bypass airflow passage 56 therebetween.

During operation of the turbofan 10, a volume of air 58 enters the turbofan 10 through an associated inlet 60 of the nacelle 50 and/or fan section 14. As the volume of air 58 passes across the fan blades 40, a first portion of the air 58 as indicated by arrows 62 is directed or routed into the bypass airflow passage 56 and a second portion of the air 58 as indicated by arrow 64 is directed or routed into the annular core inlet 20 and into the LP compressor 22. The pressure of the second portion of air 64 is then increased as it is routed through the high pressure (HP) compressor 24 and into the combustion section 26, where it is mixed with fuel and burned to provide combustion gases 66.

The combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft or spool 34, thus causing the HP shaft or spool 34 to rotate, thereby supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft or spool 36, thus causing the LP shaft or spool 36 to rotate, thereby supporting operation of the LP compressor 22 and/or rotation of the fan 38.

The combustion gases 66 are subsequently routed through the jet exhaust nozzle section 32 of the core turbine engine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the turbofan 10, also providing propulsive thrust. The HP turbine 28, the LP turbine 30, and the jet exhaust nozzle section 32 at least partially define a hot gas path 78 for routing the combustion gases 66 through the core turbine engine 16.

It will be appreciated that, although described with respect to turbofan 10 having core turbine engine 16, the present subject matter may be applicable to other types of turbomachinery. For example, the present subject matter may be suitable for use with or in turboprops, turboshafts, turbojets, industrial and marine gas turbine engines, and/or auxiliary power units. Various features of components of the turbofan 10 can be machined by laser ablation using the systems and methods described herein. However, it will be appreciated that features of components of other gas turbine engines, engines generally, other turbomachinery, and other machines and/or devices generally can be machined by laser ablation using the systems and methods described herein.

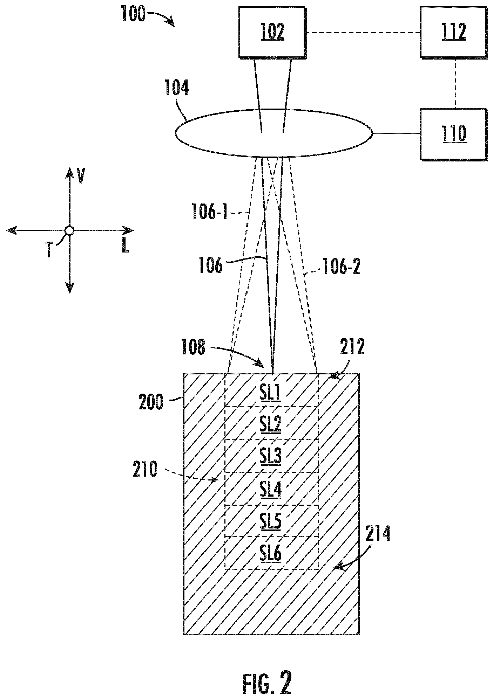

FIG. 2 provides a schematic view of an example laser system 100 according to an example embodiment of the present subject matter. For this embodiment, the laser system 100 is operatively configured to form a cavity 210 in a component 200, such as a component for a gas turbine engine. As one example, the component 200 can be a high pressure turbine nozzle and the cavity 210 can be a seal slot thereof. The seal slot can hold one end of a spline seal and a seal slot of an adjacent nozzle can hold the other end of the spline seal. The component 200 can be other suitable components as well, such as a combustor liner, compressor nozzles, etc. In addition to a seal slot, the cavity 210 can be a recess, an indentation, a channel, a slot generally, a chamber, a blind hole, or the like. The cavity 210 can have any suitable shape or geometry. In FIG. 2, the cavity 210 is shown in phantom lines as it has not yet been machined.

The component 200 can be formed of any suitable material. As one example, the component 200 can be formed of a Ceramic Matrix Composite (CMC) material. Exemplary matrix materials for a CMC component can include silicon carbide, silicon, silica, alumina, or combinations thereof. Ceramic fibers can be embedded within the matrix, such as oxidation stable reinforcing fibers including monofilaments like sapphire and silicon carbide (e.g., Textron's SCS-6), as well as rovings and yarn including silicon carbide (e.g., Nippon Carbon's NICALON^{®}, Ube Industries' TYRANNO^{®}, and Dow Corning's SYLRAMIC^{®}), alumina silicates (e.g., Nextel's 440 and 480), and chopped whiskers and fibers (e.g., Nextel's 440 and SAFFIL^{®}), and optionally ceramic particles (e.g., oxides of Si, Al, Zr, Y, and combinations thereof) and inorganic fillers (e.g., pyrophyllite, wollastonite, mica, talc, kyanite, and montmorillonite). CMC materials may have coefficients of thermal expansion in the range of about 1.3×10⁻⁶ in/in/°F to about 3.5×10⁻⁶ in/in/°F in a temperature range of approximately 1000-1200° F. As another example, the component 200 can be formed of other suitable composite materials, such as a Polymer Matrix Composite (PMC) material. As a further example, the component 200 can be formed of a metallic material.

As shown in FIG. 2, the laser system 100 defines a vertical direction V, a lateral direction L, and a transverse direction T. Each of the vertical direction V, lateral direction L, and transverse direction T are mutually perpendicular to one another and form an orthogonal direction system. For this embodiment, the laser system 100 includes a laser source 102 and a mirror or adjustable lens 104 for directing or focusing a laser beam 106 emitted from the laser source 102. As depicted in FIG. 2, the laser beam 106 is conically shaped. The adjustable lens 104 is adjustable such that the focal or focus point 108 of the laser beam 106 (i.e., the apex or vertex of the cone shaped laser beam 106) can be moved or scanned about such that desirable geometries, such as the cavity 210, in the component 200 can be laser ablated.

The laser system 100 also includes an actuator 110. The actuator 110 is operatively configured to translate, rotate, pivot, actuate, adjust, or otherwise move the adjustable lens 104 between various positions. For example, the actuator 110 can orient the adjustable lens 104 such that the laser beam 106 can be moved about (as shown by the phantom lines in FIG. 2). In this way, the angle of attack of the laser beam 106 can be modified or adjusted such that the cavity 210 can be formed as described herein. The actuator 110 can be any suitable type of actuator 110 capable of orienting the adjustable lens 104.

As further shown in FIG. 2, the laser system 100 further includes a controller 112. The controller 112 is communicatively coupled with the laser source 102 and the actuator 110. The controller 112 can be communicatively coupled with the laser source 102 and the actuator 110 via one or more signal lines or shared communication busses, or additionally or alternatively, the controller 112 can be communicatively coupled with the laser source 102 and the actuator 110 via one or more wireless connections.

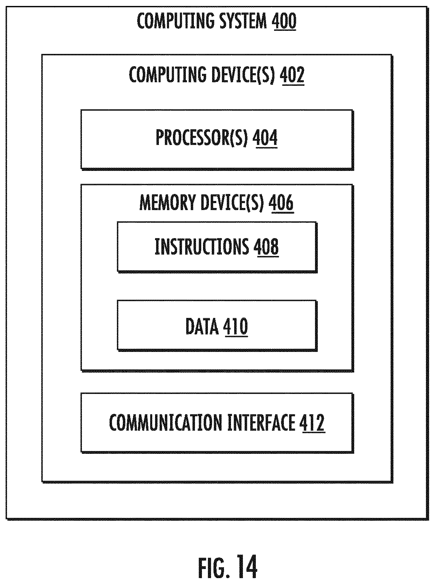

Operation of the laser system 100 is controlled by the controller 112. In some example embodiments, the controller 112 can be communicatively coupled with a control panel that can represent a general purpose I/O ("GPIO") device or functional block. In some example embodiments, the control panel can include input components or devices, such as one or more of a variety of electrical, mechanical or electro-mechanical input devices including rotary dials, push buttons, touch pads, and touch screens. The control panel provides selections for user manipulation of the operation of the laser system 100. In response to user manipulation of the control panel, the controller 112 controls operation of the various components of the laser system 100. The controller 112 can be configured and function in the same or similar manner as one of the computing devices 402 of the computing system 400 of FIG. 14.

The laser system 100 can be used to laser ablate the component 200 to form a cavity 210, such as a seal slot. Particularly, the laser system 100 can be used to form the cavity 210 by laser ablating the component 200 to remove a slice of material to form at least a portion of a section of the cavity 210 and then laser ablating an outline of the newly formed section. That is, the laser can be scanned around the outline of the newly formed section of the cavity 210 to remove sidewall taper. The process of laser ablating the component 200 to remove a slice of material to form at least a portion of a section of the cavity 210 and then laser ablating an outline of the newly formed section of the cavity 210 can be iterated section-by-section of the cavity 210, e.g., until at least a portion of the cavity 210 reaches a predetermined depth. When a portion of the cavity 210 reaches the predetermined depth, the component 200 can be laser ablated to remove excess end wall material so that an end wall of the cavity 210 is formed to the predetermined depth. An example manner in which this process can be implemented is set forth below.

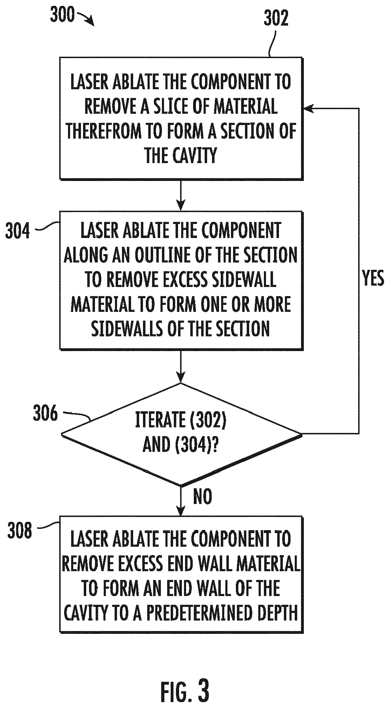

FIG. 3 provides a flow diagram of a method (300) of laser ablating a component to form a cavity therein according to one example embodiment of the present subject matter. General reference will be made to FIGS. 2 through 13 to facilitate explanation of the method (300).

At (302), the method (300) includes laser ablating the component to remove a slice of material therefrom so that at least a portion of a section of the cavity is formed. For instance, as shown in FIG. 2, the cavity 210 to be formed can be incrementally laser ablated slice-by slice. For this embodiment, the cavity 210 to be formed is to be incrementally laser ablated in six slices, including a first slice SL1, a second slice SL2, a third slice SL3, a fourth slice SL4, a fifth slice SL5, and a sixth slice SL6. The cavity 210, when formed, extends between an opening end 212 and a blind end 214, e.g., along the vertical direction V. Accordingly, when the first slice SL1 of material is removed by laser ablation, the opening end 212 of the cavity 210 is formed at least in part. When the sixth slice SL6 of material is removed by laser ablation, the blind end 214 of the cavity 210 is formed at least in part.

To remove the first slice SL1 of material from the component 200, the laser system 100 causes the laser beam 106 to scan or shoot in a predefined pattern along a surface of the component 200, e.g. as shown in FIG. 2. Particularly, the controller 112 can cause the laser source 102 to emit laser energy at a predefined intensity or power. The controller 112 can cause the actuator 110 to adjust the orientation of the adjustable lens 104 so that the emitted laser beam 106 moves along the surface of the component 200 in the predefined pattern. For instance, the laser beam 106 can be directed about along the lateral direction L between 106-1 and 106-2. The laser beam 106 can also be moved along the transverse direction T to form the 3D geometry of the cavity 210. In this way, the laser beam 106 can scan about to form the desired geometry of the opening end 212 of the cavity 210. As will be appreciated, when the laser beam 106 strikes the surface of the component 200, material is removed from the component 200 at that particular localized location.

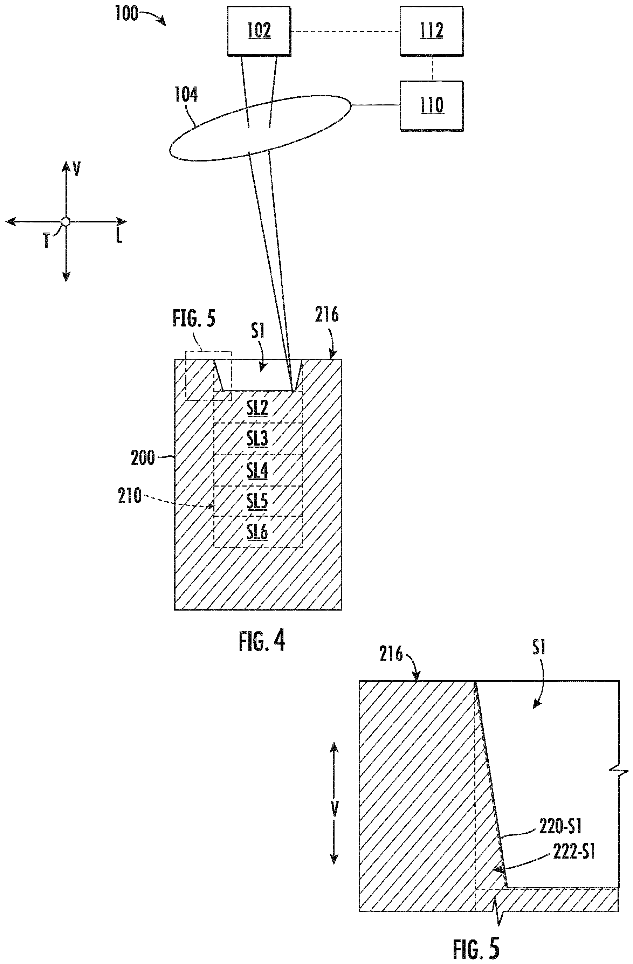

FIG. 4 provides a schematic view of the component 200 with the first slice SL1 (FIG. 2) of material removed therefrom. As shown, with a majority of the first slice SL1 (FIG. 2) of material removed by laser ablation, a part of the first section S1 of the cavity 210 is formed. The depth of the first section S1 can be controlled by the intensity of the laser beam 106 emitted, among other factors. Due to the conical shape of the laser beam 106, a portion of the laser beam 106 may clip the outer surface 216 of the component 200 when the laser beam 106 is moved proximate the sidewalls or edges of the section being formed, which results in less energy at the machining surface. Consequently, as shown in FIG. 4, the sidewalls of the newly formed portion of the section, which in this instance is the first section S1, are tapered. As shown best in FIG. 5, a close-up view of one of the tapered sidewalls 220-S1 of the newly formed portion of the first section S1 is depicted. As shown, the tapered sidewall 220-S1 is oriented at an angle with respect to the vertical direction V.

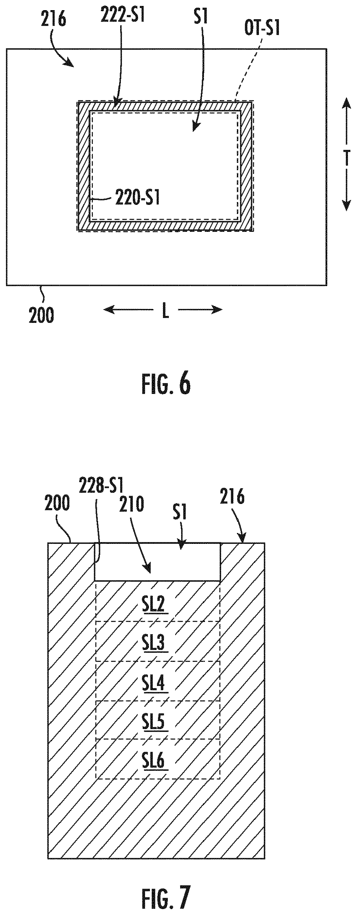

At (304), returning to FIG. 3, the method (300) includes laser ablating the component along an outline of the section to remove excess sidewall material therefrom to form one or more sidewalls of the section. By way of example, FIG. 6 provides a top plan view of the component 200 after the first slice SL1 of material has been removed by laser ablating, e.g., at (302) of method (300). As shown, as a result of removing the first slice SL1 of material, the newly formed portion of the first section S1 has tapered sidewalls 220-S1, which is undesirable in this example. Accordingly, to remove excess sidewall material 222-S1 (also depicted in FIG. 5 within the dashed-line triangle), the component 200 is laser ablated once again. Particularly, an outline OT-S1 of the first section S1 is laser ablated to remove the excess sidewall material 222-S1. The controller 112 can cause the laser source 102 to emit laser energy at a predefined intensity or power and can cause the actuator 110 to adjust the orientation of the adjustable lens 104 so that the emitted laser beam 106 scans, traces, or otherwise moves along the outline OT-S1 of the first section S1. In this example embodiment, the outline OT-S1 of the first section S1 has a rectangular ring shape; accordingly, the laser beam 106 is controlled to scan or trace along this shape. In this way, the excess sidewall material 222-S1 forming the tapered sidewalls 220-S1 of the first section S1 can be removed, rendering sidewalls of the first section S1 formed to specification, e.g., made parallel with the vertical direction V. In some implementations, multiple shots or passes are made along the outline OT-S1 of the first section S1 to remove the excess sidewall material 222-S1.

FIG. 7 provides a schematic cross-sectional view of the component 200 after the first slice S1 (FIG. 2) of material has been removed and after the excess sidewall material 222-S 1 has been removed by laser ablating along the outline OT-S1 of the first section S1. As a result, sidewalls 228-S1 forming the first section S1 of the cavity 210 are now straight or substantially straight without tapering as depicted in FIG. 7. The first section S1 of the cavity 210 is shown fully formed in FIG. 7. The first section S1 is formed to a desired or preselected depth and the sidewalls 228-S1 have no or negligible tapering.

At (306), with reference to FIG. 3, in some implementations, the method (300) can include iterating (302) and (304) to form subsequent sections of the cavity. For instance, with the first section S1 of the cavity 210 fully formed as shown in FIG. 7, subsequent sections of the cavity 210 can be formed in the same manner as the first section S1 was formed. In some implementations, in forming subsequent sections of the cavity 210, the slice of material removed by laser ablation at (302) is done so prior to the excess sidewall material being removed by laser ablation at (304).

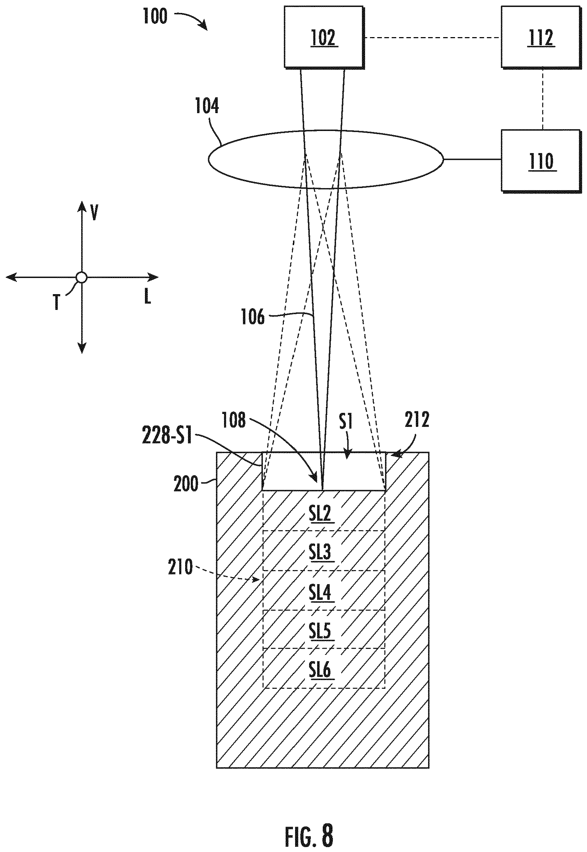

By way of example, a second section of the cavity 210 can be formed in the same manner as the first section S1. As shown in FIG. 8, with the first section S1 of the cavity 210 formed, the laser ablating action of (302) can commence once again. Specifically, the controller 112 can cause the laser source 102 to emit laser energy at a predefined intensity or power and can cause the actuator 110 to adjust the orientation of the adjustable lens 104 so that the emitted laser beam 106 moves in a predefined pattern. In this manner, the component 200 can be laser ablated so that the second slice SL2 of material is removed.

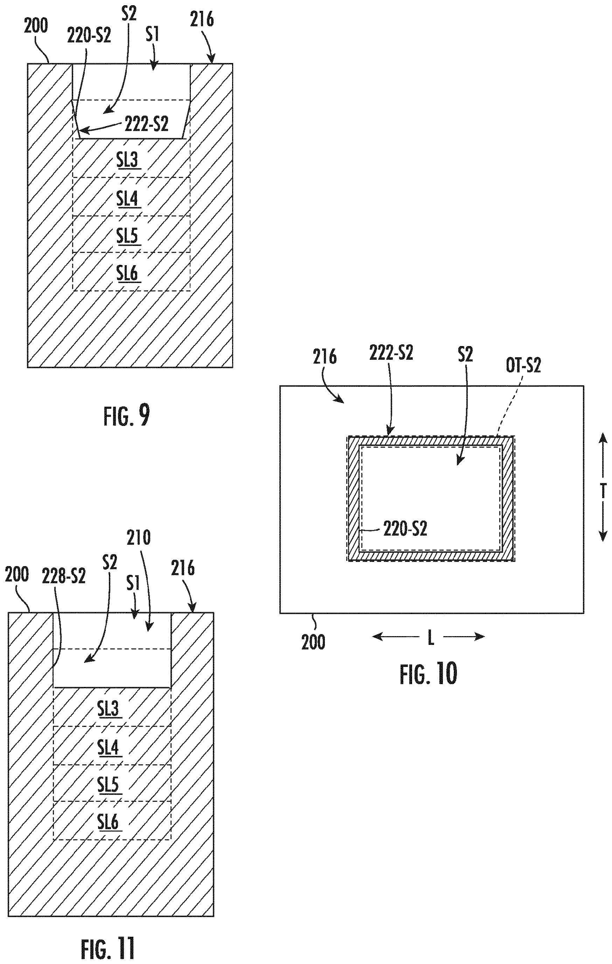

FIG. 9 shows the second slice of material SL2 (FIG. 8) removed so that at least a portion of the second section S2 of the cavity 210 is formed. As noted above, due to the conical shape of the laser beam 106, a portion of the laser beam 106 may clip the outer surface 216 and/or the sidewalls 228-S 1 of the first section S1 when the laser beam 106 is moved about to remove the second slice of material SL2, which results in less energy at the machining surface. Consequently, tapered sidewalls 220-S2 result as shown in FIG. 9. The tapered sidewalls 220-S2 are oriented at an angle with respect to the vertical direction V.

With reference to FIGS. 8, 9, and 10, after the second slice SL2 of material has been removed by laser ablating, excess sidewall material 222-S2 is removed from the component 200. The excess sidewall material 222-S2 can be removed by laser ablating an outline OT-S2 of the second section S2. Particularly, the controller 112 can cause the laser source 102 to emit laser energy at a predefined intensity or power and can cause the actuator 110 to adjust the orientation of the adjustable lens 104 so that the emitted laser beam 106 moves or scans along the outline OT-S2 of the second section S2. In this way, the excess sidewall material 222-S2 forming the tapered sidewalls 220-S2 of the second section S2 can be removed, rendering sidewalls of the second section S2 formed to specification, e.g., made parallel with the vertical direction V. In some implementations, multiple shots or passes are made along the outline OT-S2 of the second section S2 to remove the excess sidewall material 222-S2.

FIG. 11 provides a schematic cross-sectional view of the component 200 after the second slice S2 (FIG. 8) of material has been removed and after the excess sidewall material 222-S2 has been removed by laser ablating along the outline OT-S2 of the second section S2. As a result, sidewalls 228-S2 forming the second section S2 of the cavity 210 are now straight or substantially straight without tapering as depicted in FIG. 11. The second section S2 of the cavity 210 is shown fully formed in FIG. 11. The second section S2 is formed to a desired or preselected depth and the sidewalls 228-S2 have no or negligible tapering.

As noted, (302) and (304) of the method (300) can be iterated to form a number of sections of the cavity. In this example, the process is iterated six times. Accordingly, after the second section S2 is formed, a third section can be formed, a fourth section can be formed, a fifth section can be formed, and a sixth section can be formed. As will be appreciated, (302) and (304) of the method (300) can be repeated any suitable number of times to achieve the desired geometry of the cavity 210. In some implementations, (302) and (304) can be iterated until at least a portion of the cavity reaches a predetermined depth. In other implementations, (302) and (304) can be iterated a predetermined number of times to reach the predetermined depth. The predetermined number of iterations required to achieve the predetermined depth may depend on the intensity of the laser beam during the removal of a given slice and/or during an outline pass, the scan speed, and the predefined pattern used to remove material. In some implementations, all of the formed sections of the cavity have the same thickness or vertical height. In other implementations, the sections need not have the same thickness. For instance, in forming the last section of the cavity 210, the power or intensity of the laser beam can be adjusted (e.g., reduced), and consequently, the thickness of the last section can be less thick than the other formed sections of the cavity 210.

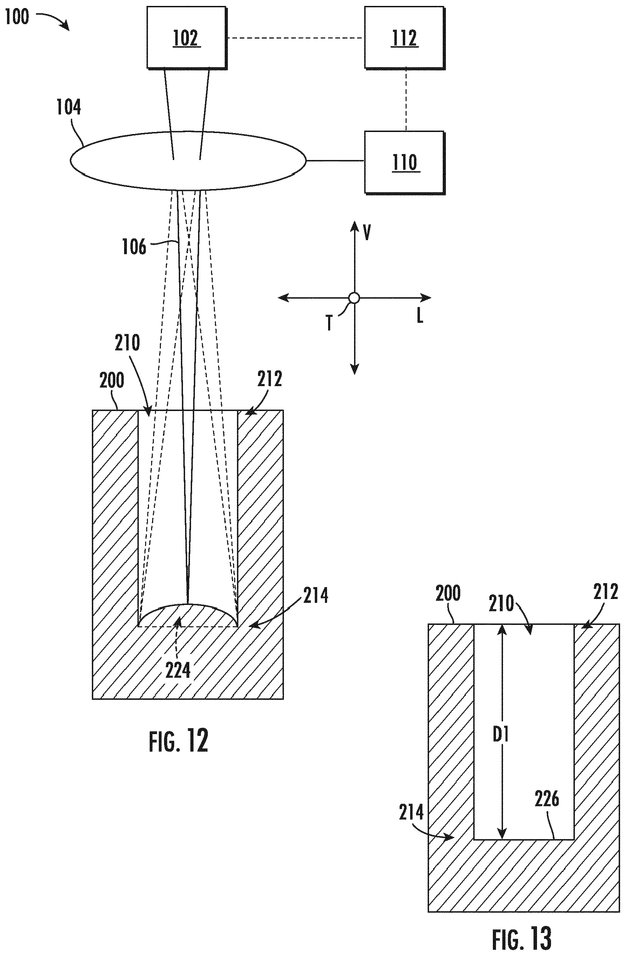

At (308), with reference to FIG. 3, the method (300) includes laser ablating the component to remove excess end wall material therefrom to form an end wall of the cavity to a predetermined depth. Notably, the laser ablation of the component at (304) to remove excess sidewall material section-by-section results in a hump or rounded shape at the blind end 214 of the cavity 210 as shown in FIG. 12. Particularly, the laser energy shot along the outline of each section causes more material to be removed around the outline or sidewalls of the cavity 210 than other areas, and as a result, excess end wall material 224 having a rounded shape remains at the blind end 214 of the cavity 210. Accordingly, a cleanup laser ablation shot or pass is performed to remove the excess end wall material 224 to form an end wall 226 of the cavity 210 to a predetermined depth D1 as shown in FIG. 13.

Specifically, the controller 112 can cause the laser source 102 to emit laser energy at a predefined intensity or power and can cause the actuator 110 to adjust the orientation of the adjustable lens 104 so that the emitted laser beam 106 moves or scans along the excess end wall material 224 in a predefined pattern. The laser beam 106 strikes the excess end wall material 224 and removes it from the component 200. In this way, the end wall 226 of the cavity 210 can be formed to specification, e.g., to the predetermined depth D1. As depicted, the sidewalls and the end wall 226 of the resultant cavity 210 are formed to specification with high precision. In some implementations, in laser ablating the component to remove the excess end wall material 224 to form the end wall 226 of the cavity 210 at (308), an entirety of the end wall 226 is formed to the predetermined depth D1, e.g., so that the end wall 226 is flat or substantially flat (e.g., within five degrees (5°) of being perpendicular to the longitudinal length of the cavity 210).

The predefined pattern used to laser ablate the excess end wall material 224 can be determined based at least in part on the predicted shape of the excess end wall material 224. The intensity or power of the laser beam 106, the laser scan speed, and the number of outline laser shots made along the outlines of the sections can be considered in predicting the shape of the excess end wall material 224. The predefined pattern selected for laser ablating the excess end wall material 224 can be adjusted based at least in part on the predicted shape of the excess end wall material 224.

FIG. 14 provides an example computing system 400 in accordance with an example embodiment of the present subject matter. The controller 112 described herein can include various components and perform various functions of the one or more computing devices 402 of the computing system 400 described below.

As shown in FIG. 14, the computing system 400 can include one or more computing device(s) 402. The computing device(s) 402 can include one or more processor(s) 404 and one or more memory device(s) 406. The one or more processor(s) 404 can include any suitable processing device, such as a microprocessor, microcontroller, integrated circuit, logic device, and/or other suitable processing device. The one or more memory device(s) 406 can include one or more computer-readable media, including, but not limited to, non-transitory computer-readable media, RAM, ROM, hard drives, flash drives, and/or other memory devices.

The one or more memory device(s) 406 can store information accessible by the one or more processor(s) 404, including computer-readable instructions 408 that can be executed by the one or more processor(s) 404. The instructions 408 can be any set of instructions that when executed by the one or more processor(s) 404, cause the one or more processor(s) 404 to perform operations, such as any of the operations described herein. For instance, the methods provided herein can be implemented in whole or in part by the computing system 400. The instructions 408 can be software written in any suitable programming language or can be implemented in hardware. Additionally, and/or alternatively, the instructions 408 can be executed in logically and/or virtually separate threads on processor(s) 404. The memory device(s) 406 can further store data 410 that can be accessed by the processor(s) 404. For example, the data 410 can include models, databases, etc.

The computing device(s) 402 can also include a network interface 412 used to communicate, for example, with the other components of the laser system 100 (e.g., via a network). The network interface 412 can include any suitable components for interfacing with one or more network(s), including for example, transmitters, receivers, ports, antennas, and/or other suitable components.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

Although specific features of various embodiments may be shown in some drawings and not in others, this is for convenience only. In accordance with the principles of the present disclosure, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims and may include other examples that occur to those skilled in the art. Such other examples are intended to be within the scope of the claims if they include structural elements that do not differ from the literal language of the claims or if they include equivalent structural elements with insubstantial differences from the literal language of the claims.

Further aspects of the invention are provided by the subject matter of the following clauses:
A method of laser ablating a component to form a cavity, the method comprising: (a) laser ablating the component to remove a slice of material therefrom so that at least a portion of a section of the cavity is formed; (b) laser ablating the component along an outline of the section to remove excess sidewall material therefrom to form one or more sidewalls of the section; (c) iterating (a) and (b) of the method to form one or more subsequent sections of the cavity; and (d) after iterating at (c), laser ablating the component to remove excess end wall material therefrom to form an end wall of the cavity to a predetermined depth.

The method of any preceding clause, wherein laser ablating the component along the outline of the section to remove excess sidewall material therefrom at (b) comprises laser ablating the component along the outline of the section multiple times.

The method of any preceding clause, wherein the component is laser ablated along the outline of the section multiple times at (b) prior to the method iterating to (a) to laser ablate the component to remove a subsequent slice of material so that at least a portion of a given one of the one or more subsequent sections of the cavity is formed.

The method of any preceding clause, wherein the slice of material is removed by the laser ablating in (a) prior to the excess sidewall material being removed by the laser ablating in (b).

The method of any preceding clause, wherein the component is laser ablated along the outline of the section or a given one of the one or more subsequent sections of the cavity at (b) prior to the method iterating to (a) to laser ablate the component to remove a subsequent slice of material so that at least a portion of a next one of the one or more subsequent sections of the cavity is formed.

The method of any preceding clause, wherein laser ablating the component along the outline of the section at (b) removes the excess sidewall material therefrom such that the one or more sidewalls forming the section are not tapered.

The method of any preceding clause, wherein the excess end wall material, prior to removal by laser ablation at (d), has a rounded shape along a cross section thereof, the rounded shape having a perimeter at a greater depth than a remainder portion of the rounded shape.

The method of any preceding clause, wherein (a) and (b) of the method (300) are iterated at (c) until at least a portion of the cavity reaches a predetermined depth.

The method of any preceding clause, wherein (a) and (b) of the method (300) are iterated at (c) until a predetermined number of iterations have occurred.

The method of any preceding clause, wherein the component is a ceramic matrix composite component.

The method of any preceding clause, wherein the component is a turbine nozzle for a gas turbine engine and the cavity is a seal slot thereof.

The method of any preceding clause, wherein in laser ablating the component to remove the excess end wall material so as to form the end wall of the cavity at (d), an entirety of the end wall is formed to the predetermined depth.

A method of laser ablating a turbine nozzle to form a seal slot, the method comprising: (a) laser ablating the turbine nozzle to remove a slice of material therefrom so that at least a portion of a section of the seal slot is formed; (b) laser ablating the turbine nozzle to remove excess sidewall material therefrom to form one or more sidewalls of the section of the seal slot; and (c) laser ablating the turbine nozzle to remove excess end wall material to form an end wall of the seal slot to a predetermined depth.

The method of any preceding clause, further comprising: prior to (c), iterating (a) and (b) of the method for one or more subsequent sections of the seal slot.

The method of any preceding clause, wherein laser ablating the turbine nozzle at (b) comprises scanning a laser along an outline of the section multiple times.

The method of any preceding clause, wherein the turbine nozzle is formed of a ceramic matrix composite material.

A non-transitory computer readable medium comprising computer-executable instructions, which, when executed by one or more processors of a controller of a laser system, cause the controller to: (a) cause the laser system to laser ablate a component to remove a slice of material therefrom so that at least a portion of a section of a cavity is formed; (b) cause the laser system to laser ablate the component along an outline of the section to remove excess sidewall material therefrom to form one or more sidewalls of the section; (c) cause the laser system to iterate (a) and (b) for one or more subsequent sections of the cavity; and (d) after iterating at (c), cause the laser system to laser ablate the component to remove excess end wall material therefrom to form an end wall of the cavity to a predetermined depth.

The non-transitory computer readable medium of any preceding clause, wherein the slice of material is removed by laser ablation in (a) prior to the excess sidewall material being removed by laser ablation in (b).

The non-transitory computer readable medium of any preceding clause, wherein the component is laser ablated along the outline of the section multiple times at (b) prior to iterating to (a) to laser ablate the component to remove a subsequent slice of material so that at least a portion of a given one of the one or more subsequent sections of the cavity is formed.

The non-transitory computer readable medium of any preceding clause, wherein the component is a turbine nozzle for a gas turbine engine and the cavity is a seal slot thereof.

A system, comprising: a laser source for emitting a laser beam; an adjustable lens for directing the laser beam; an actuator operatively coupled with the adjustable lens; and a controller having one or more processors and one or more memory devices, the controller communicatively coupled with the laser source and the actuator, the one or more processors being configured to: (a) collectively control the laser source and the actuator to laser ablate the component such that a slice of material is removed therefrom thereby forming at least a portion of a section of a cavity; (b) collectively control the laser source and the actuator to laser ablate the component along an outline of the section to remove excess sidewall material therefrom to form one or more sidewalls of the section; (c) cause the laser system to iterate (a) and (b) for one or more subsequent sections of the cavity; and (d) after iterating at (c), collectively control the laser source and the actuator to laser ablate the component to remove excess end wall material to form an end wall of the cavity to a predetermined depth.

## Claims

1. A method of laser ablating a component to form a cavity, the method comprising:
(a) laser ablating the component to remove a slice of material therefrom so that at least a portion of a section of the cavity is formed;
(b) laser ablating the component along an outline of the section to remove excess sidewall material therefrom to form one or more sidewalls of the section;
(c) iterating (a) and (b) of the method to form one or more subsequent sections of the cavity; and
(d) after iterating at (c), laser ablating the component to remove excess end wall material therefrom to form an end wall of the cavity to a predetermined depth.

2. The method of any preceding claim, wherein laser ablating the component along the outline of the section to remove excess sidewall material therefrom at (b) comprises laser ablating the component along the outline of the section multiple times.

3. The method of claim 2, wherein the component is laser ablated along the outline of the section multiple times at (b) prior to the method iterating to (a) to laser ablate the component to remove a subsequent slice of material so that at least a portion of a given one of the one or more subsequent sections of the cavity is formed.

4. The method of any preceding claim, wherein the slice of material is removed by the laser ablating in (a) prior to the excess sidewall material being removed by the laser ablating in (b).

5. The method of any preceding claim, wherein the component is laser ablated along the outline of the section or a given one of the one or more subsequent sections of the cavity at (b) prior to the method iterating to (a) to laser ablate the component to remove a subsequent slice of material so that at least a portion of a next one of the one or more subsequent sections of the cavity is formed.

6. The method of any preceding claim, wherein laser ablating the component along the outline of the section at (b) removes the excess sidewall material therefrom such that the one or more sidewalls forming the section are not tapered.

7. The method of any preceding claim, wherein the excess end wall material, prior to removal by laser ablation at (d), has a rounded shape along a cross section thereof, the rounded shape having a perimeter at a greater depth than a remainder portion of the rounded shape.

8. The method of any preceding claim, wherein (a) and (b) of the method (300) are iterated at (c) until at least a portion of the cavity reaches a predetermined depth.

9. The method of any preceding claim, wherein (a) and (b) of the method (300) are iterated at (c) until a predetermined number of iterations have occurred.

10. The method of any preceding claim, wherein the component is a ceramic matrix composite component.

11. The method of any preceding claim, wherein the component is a turbine nozzle for a gas turbine engine and the cavity is a seal slot thereof.

12. The method of any preceding claim, wherein in laser ablating the component to remove the excess end wall material so as to form the end wall of the cavity at (d), an entirety of the end wall is formed to the predetermined depth.

13. A method of laser ablating a turbine nozzle to form a seal slot, the method comprising:
(a) laser ablating the turbine nozzle to remove a slice of material therefrom so that at least a portion of a section of the seal slot is formed;
(b) laser ablating the turbine nozzle to remove excess sidewall material therefrom to form one or more sidewalls of the section of the seal slot; and
(c) laser ablating the turbine nozzle to remove excess end wall material to form an end wall of the seal slot to a predetermined depth.

14. The method of claim 13, further comprising:
prior to (c), iterating (a) and (b) of the method for one or more subsequent sections of the seal slot.

15. A non-transitory computer readable medium comprising computer-executable instructions, which, when executed by one or more processors of a controller of a laser system, cause the controller to:
(a) cause the laser system to laser ablate a component to remove a slice of material therefrom so that at least a portion of a section of a cavity is formed;
(b) cause the laser system to laser ablate the component along an outline of the section to remove excess sidewall material therefrom to form one or more sidewalls of the section;
(c) cause the laser system to iterate (a) and (b) for one or more subsequent sections of the cavity; and
(d) after iterating at (c), cause the laser system to laser ablate the component to remove excess end wall material therefrom to form an end wall of the cavity to a predetermined depth.
